# EUROPÄISCHE PATENTSCHRIFT

(11) **EP 0 946 272 B1**
(45) Veröffentlichungstag und Bekanntmachung des Hinweises auf die Patenterteilung: **07.08.2002**
(21) Anmeldenummer: 97949955.5
(22) Anmeldetag: 19.11.1997
(51) Int. Cl.: B01F 3/02

(54) **HERSTELLUNG HOMOGENER GASGEMISCHE MIT SF6**
PREPARATION OF HOMOGENEOUS GAS MIXTURES WITH SF6
PREPARATION DE MELANGES HOMOGENES DE GAZ COMPRENANT DU SF6

(30) Priorität: 28.11.1996 DE 19649254
(43) Veröffentlichungstag der Anmeldung: 06.10.1999
(73) Patentinhaber: Solvay Fluor und Derivate GmbH, 30173 Hannover (DE)
(72) Erfinder: PITTROFF, Michael, D-30161 Hannover (DE); WICKEL, Hans-Peter, D-74206 Bad Wimpfen (DE); DISTEL, Reiner, D-74206 Bad Wimpfen (DE); BELT, Heinz-Joachim, D-30938 Burgwedel (DE)
(74) Vertreter: Gosmann, Martin, Dr.
(86) Internationale Anmeldenummer: DE9702710
(87) Internationale Veröffentlichungsnummer: WO9823363

(56) Entgegenhaltungen:
- DE-A- 2 255 778
- DE-A- 3 611 589
- FR-A- 2 631 856
- US-A- 4 239 396
- US-A- 4 255 124
- US-A- 5 145 514

## Beschreibung

Die Erfindung bezieht sich auf ein Verfahren zur Herstellung von im wesentlichen homogenen, komprimierten Gasgemischen mit SF₆ und eine dabei verwendbare, insbesondere mobile, Mischstation.

Im Prinzip kann man getrennt voneinander vorliegende Gase einfach dadurch in ein homogenes Gasgemisch überführen, indem man die Gase in einen Behälter überführt und eine ausreichend lange Zeit abwartet, bis sich durch Diffusion ein entsprechend homogenes Gasgemisch eingestellt hat. Da hierfür jedoch extrem lange Zeiträume benötigt werden, ist ein solches Verfahren technisch nicht einsetzbar. Natürlich wird auch eine Vermischung beobachtet, wenn man Gasströme in einen stationären Mischer und/oder eine gemeinsame Leitung einleitet. Die FR-A-2 631 856 offenbart eine Vorrichtung zur Herstellung von Gasmischungen, bei welcher die Gase in einem Mischer vorvermischt werden, durch einen stationären Mischer in einen Kompressor und dann in den Verbraucher geleitet werden. Druckschwankungen werden über die Steuerung des Kompressor-Motors in Abhängigkeit von Druck vor dem Kompressor reguliert. Jedoch ist die Durchmischung dabei nicht immer so, daß man die erzielten Gemische als "homogen" betrachten kann, insbesondere dann, wenn man Gase mit hohem Dichteunterschied miteinander vermischen will, beispielsweise solche, die SF₆ enthalten. Ein solches Gasgemisch ist das Gemisch von SF₆ (Schwefelhexafluorid) und N₂ (Stickstoff). SF₆ hat als Gas eine Dichte von 6,18 g/l, Stickstoff hat als Gas eine Dichte von 1,170 g/l jeweils bestimmt bei 15 °C und 1 bar absolut (Normalbedingungen im Sinne dieser Anmeldung). Solche Gasgemische werden beispielsweise als Isoliergas für stromleitende Erdkabel eingesetzt. Ein besonderes Problem dabei ist, daß die Gasgemische (die in sehr großen Mengen benötigt werden) zweckmäßig vor Ort erzeugt werden müssen. Wollte man nämlich in einer Fabrik vorfabrizierte Gasgemische verwenden, müßte man diese in Gasflaschen unter hohem Druck transportieren, um die Transportkosten möglichst gering zu halten; dies ist jedoch nicht möglich, da dann der Anteil an SF₆ auskondensiert und eine entsprechende Entmischung eintreten würde.

Aufgabe der vorliegenden Erfindung ist es, ein Verfahren anzugeben, mit welchem man homogene komprimierte Gasgemische mit SF₆ und anderen Gasen mit hohem Dichteunterschied erzeugen kann. Aufgabe der vorliegenden Erfindung ist es weiterhin, eine dafür verwendbare Mischstation, insbesondere eine dafür verwendbare mobile Mischstation anzugeben. Eine weitere Aufgabe war die Angabe einer gegen Schmutz und Witterungseinflüsse geschützten Mischstation. Diese Aufgaben werden durch das erfindungsgemäße Verfahren bzw. die erfindungsgemäße Mischstation gelöst.

Das erfindungsgemäße Verfahren zur Herstellung von im wesentlichen homogenen komprimierten Gasgemischen aus getrennt voneinander vorliegenden Gasen, wobei ein Gas SF₆ ist und das oder die anderen Gase eine Dichte aufweisen, die unter Normalbedingungen mindestens 4 g/l unterhalb derjenigen Dichte des SF₆ liegt, sieht vor, daß man die getrennt voneinander vorliegenden Gase unter Bildung eines inhomogenen Gasgemisches vorvermischt, das inhomogene Gasgemisch in einen statischen Mischer und danach in einen Puffertank leitet, das Gasgemisch aus dem Puffertank in einen Kompressor leitet und aus dem Kompressor im wesentlichen homogenes komprimiertes Gasgemisch abgibt, wobei man, einen Teil des aus dem Kompressor abgegebenen, im wesentlichen homogenen komprimierten Gasgemisches über eine Rückführungsleitung in den Puffertank rückführt.

Das erfindungsgemäße Verfahren ermöglicht es, homogen vermischte Gasgemische am Ort der Verwendung herzustellen. Es ist deshalb nicht mehr notwendig, Gasgemische homogen gemischt ab Fabrik zu liefern. Ein weiterer Vorteil ist es, daß große Durchflußmengen (beispielsweise oberhalb von 200 Nm³ pro Stunde!) verarbeitet werden können; dabei ist der Grad der Vermischung unabhängig von den Querschnitten der verwendeten Leitungen. Eine dosierte Abgabe des fertigen homogenen Gasgemisches ist möglich.

Erfindungs gemäß führt man das Verfahren unter Verwendung eines Puffertanks durch und baut in die Rückführungsleitung ein Regelventil ein. Mit diesem Regelventil wird die Rückführung eines Teiles des Gasgemisches auf den gewünschten Wert eingeregelt. Diese Ausführungsform weist den Vorteil auf, daß der Kompressor unter Gasballast gefahren werden kann und zusätzlich die Durchmischung noch weiter verbessert wird. Das Regelventil kann beispielsweise so eingestellt werden, daß ein vorgegebener Anteil des Volumens des aus dem Kompressor abgegebenen komprimierten Gases rückgeführt wird.

Zweckmäßig sieht man eine Sicherheitseinrichtung vor, die das Erreichen der Füllgrenze im zu füllenden Stromkabel oder der zu füllenden Druckgasflasche registriert und den Kompressor abschaltet. Es kann sich z. B. um ein Überdruckventil handeln, welches ab einem vorgegebenen Druck öffnet und zweckmäßig den Kompressor abschaltet. Die Überdruckleitung kann mit dem Puffertank verbunden sein. Auf diese Weise bleibt das abgeblasene Gas im Kreislauf.

Bevorzugt kann man das erfindungsgemäße Verfahren zur Herstellung von Gemischen aus Gasen verwenden, die einen hohen Dichteunterschied mindestens 4,5 g/l aufweisen. Besonders gut geeignet ist das Verfahren zur Herstellung von homogenen Gasgemischen, die SF₆ und N₂ enthalten oder daraus bestehen. Solche Gasgemische werden beispielsweise als Isoliergas für stromführende Erdkabel eingesetzt.

Der Kompressor wird so einreguliert, daß er ein Gasgemisch mit dem gewünschten Druck liefert. Gasgemische mit SF₆ und N₂, die für die genannte Anwendung als Isoliergas in Erdkabeln verwendet werden sollen, gibt man vorteilhaft mit einem Druck von 1 bis 13 bar absolut ab. Insbesondere liegt der Druck im Bereich von 7 bis 13 bar absolut.

Ölfrei arbeitende Kompressoren, insbesondere Membrankompressoren, aber auch Kolbenkompressoren, werden mit Vorteil eingesetzt.

Die Regelung der Gasmengen, die zugeführt werden, im Gasgemische bestimmter Zusammensetzung zu bilden, wird bevorzugt über Massendurchflußmesser vorgenommen. Dies ist gerade bei Gasen mit hohem Dichteunterschied von Vorteil; die Gasmengen können trotz variabler Temperaturen (Einflüsse der Tages- oder Jahreszeit) exakt geregelt werden.

Besonders gut eignet sich das erfindungsgemäße Verfahren zur Herstellung von im wesentlichen homogenen komprimierten Gasgemischen, welche 3 bis 50, vorzugsweise 3 bis 20 Vol.-% SF₆, Rest auf 100 Vol.-% N₂ enthalten. Der gewünschte Gehalt an SF₆ weicht in einer gezogenen Probe maximal um ±0,7 Vol.-% von demjenigen Wert ab, der bei idealer Durchmischung vorliegt. Gegebenenfalls erhöht man den Anteil des über die Rückführungsleitung in den Puffertank rückgeführten bereits gemischten Gases. Die Analyse kann z. B. über Gaschromatographie erfolgen.

Eine bevorzugte Ausführungsform des erfindungsgemäßen Verfahrens sieht vor, daß man ein SF₆ und N₂ enthaltendes oder daraus bestehendes Gasgemisch erzeugt und dieses als Isolatorgas in stromleitende Erdkabel einleitet.

Ein weiterer Gegenstand der Erfindung ist eine Mischstation, welche zur Durchführung des erfindungsgemäßen Verfahrens brauchbar zur Erzeugung von Gasgemischen mit SF₆ und wesentlich leichteren Gasen ist. Diese Mischstation weist folgende Bauteile auf: mindestens 2 Zuführungsleitungen zur Zuführung der zu vermischenden Gase; eine Gasleitung zur gemeinsamen Weiterleitung der vorvermischten Gase; einen stationären Mischer und einen Puffertank, in den die Gasleitung zur gemeinsamen Weiterleitung der vorvermischten Gase mündet; eine Gasleitung, die mit dem Puffertank und einem Kompressor verbunden ist, durch welche Gasgemisch aus den Puffertank in den Kompressor geleitet wird; ein Kompressor, in welchem das aus dem Puffertank abgeleitete Gasgemisch komprimiert und homogenisiert wird; eine Entnahmeleitung zur Ableitung des homogenen komprimierten Gasgemisches aus dem Kompressor; eine Rückführungsleitung, die mit der Entnahmeleitung aus dem Kompressor und dem Puffertank verbunden ist; ein Regelventil in der Rückführungsleitung. Die Zuführungsleitung der zu vermischenden Gase können über ein T-Stück mit der Gasleitung zur gemeinsamen Weiterleitung der Gase verbunden sein.

Die Mischstation kann weitere nützliche Bauteile wie ein oder mehrere Manometer, Druckminderer, Durchflußmesser, Überdruckventile, automatische Absteller für den Kompressor, Abnahmestellen für Probeentnahme oder eine Abnahmestelle für die homogene Gasmischung aufweisen. Besonders vorteilhaft weist die Vorrichtung Massendurchflußmesser auf, um die Gasmengen einzuregeln. Eine solche Vorrichtung liefert unabhängig von der Temperatur (Tageszeit, Jahreszeit), bei der sie betrieben wird, exakte Ergebnisse - trotz der hohen Gasdichteunterschiede.

Die Mischstation kann mobil ausgeführt sein. Sie umfaßt dann die vorstehend beschriebene Mischstätion und ein Fahrgestell, auf welchem die Mischstation montiert ist. Beispielsweise kann das Fahrgestell ein Lastkraftwagen oder LKW-Anhänger sein. Dies hat den Vorteil, daß die Mischstation entsprechend der Verlegung der zu isolierenden Erdkabel weiterbewegt werden kann.

Die Mischstation kann weiterhin umfassen: mindestens eine Halterung zur Aufnahme von Druckgasflaschen eines oder mehrerer der unvermischten Gase; Anschlüsse zum Anschluß einer Druckgasflasche zur Einfüllung des homogenen komprimierten Gasgemisches; mindestens eine Halterung für eine solche Druckgasflasche.

Außerdem kann sie Mittel zum Schutz gegen Außeneinflüsse aufweisen. Es können beispielsweise Aufbauten mit einer Plane vorgesehen sein, die Schmutz und Witterungseinflüsse von ihr fernhalten.

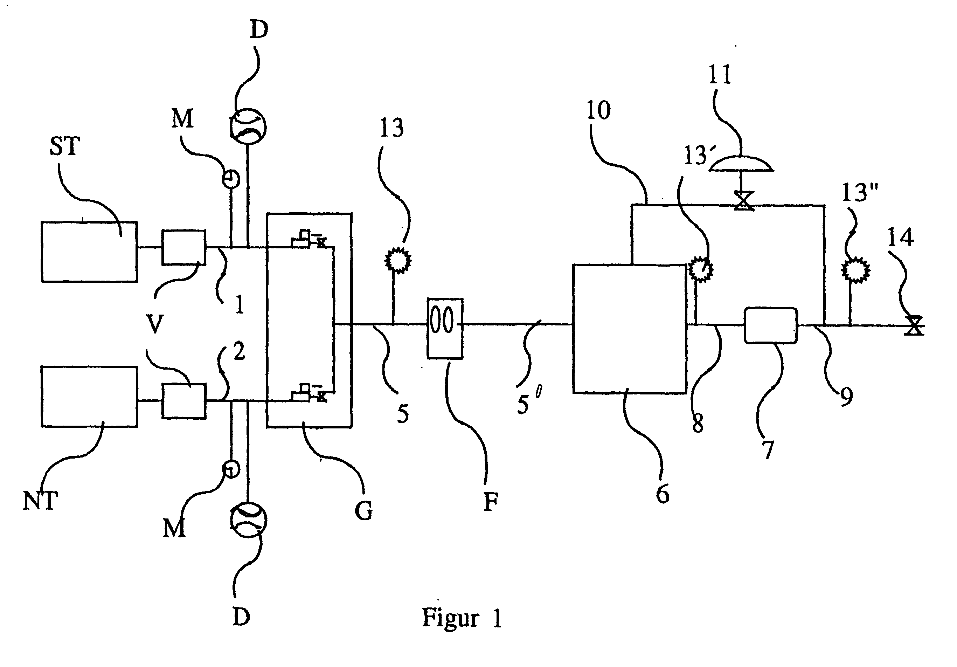

Das erfindungsgemäße Verfahren wird anhand von Fig.1 erläutert. Schwefelhexafluorid und Stickstoff werden aus dem Schwefelhexafluorid-Tank ST bzw. dem Stickstoff-Tank NT über Verdampfer V, Manometer M und Druckminderer D in einen Gasmischer G eingeleitet. Der Druck zwischen Manometer und Druckminderer beträgt 9 bis 15 bar. Im Gasmischer werden die beiden Gase über Massendurchflußmesser und Drosselventile in eine gemeinsame Leitung 5 eingeleitet. Der Differenzdruck zwischen M und dem statischen Mischer F beträgt mindestens 3 bar. Über den statischen Mischer F wird das vorgemischte Gas mittels der Gasleitung 5' in den Puffertank 6 eingeleitet und aus dem Puffertank in den Kompressor 7 über die Leitung 8 eingebracht. Ein Teil des über die Leitung 9 dem Kompressor entnommenen Gases wird über die Leitung 10 und das Regelventil 11 in den Puffertank zurückgeführt. Der Druck in der Leitung 9 beträgt bis 13 bar (d. h. 14 bar absolut). Über die Probeentnahmestellen 13, 13' und 13" können Gasproben zur Analyse entnommen werden. Die Durchflußmenge in der Leitung 9 beträgt von 5 bis 250 Nm³/h. Über die Leitung 9 wird homogenes Gasgemisch in eine , hier nicht eingezeichnete, Gasflasche eingefüllt. Das Regelventil 11 wird so eingestellt, daß der gewünschte Durchmischungsgrad erzielt wird - je mehr Volumenanteil zurückfließt, desto idealer die Durchmischung, aber natürlich um so geringer auch die Abgabemenge an komprimiertem Gasgemisch. Das komprimierte Gas wird über das Absperrventil 14 an den zu befüllenden Gegenstand (z.B. ein Stromkabel oder eine Druckgasflasche) abgegeben.

Die Durchflußmengen aus dem Schwefelhexafluorid-Tank bzw. dem Stickstoff-Tank wurden so eingeregelt, daß das Volumenverhältnis von SF₆:N₂ genau 5:95 betrug. Über die Probenentnahmestelle 13 wurde eine Gasprobe entnommen, welche gemäß Analyse einen Gehalt von 6,7 Vol.-% SF₆ und 93,3 Vol.-% N₂ aufwies. Dies deutet auf eine noch unvollkommene Durchmischung hin. Proben, die direkt hinter dem Gaspuffertank und aus der Gasflasche gezogen wurden, wiesen jeweils einen Gehalt von 5 Vol.-% SF₆ und 95 Vol-% N₂ hin und belegen eine optimale Durchmischung.

Der Versuch wurde unter Einstellung eines Volumenverhältnisses von SF₆:N₂ auf 15:85 wiederholt. Eine direkt hinter dem Gasmischer gezogene Probe wies einen Gehalt von 16,7 Vol-% SF₆ und 83,3 Vol-% N₂ auf. Eine hinter dem Puffertank gezogene Probe enthielt 15,7 Vol.-%, eine aus der Gasflasche entnommene Probe 15,8 Vol-% SF₆ auf. Die Abweichung vom idealen Wert von 15 Vol-% wird darauf zurückgeführt, daß der Gasmischer im Grenzbereich betrieben worden ist und deshalb das Volumenverhältnis von SF₆:N₂ trotz der nominalen Einstellung auf 15:85 effektiv bei ca. 15,7:84,3 lag, die Durchmischung also ideal war.

## Patentansprüche

1. Verfahren zur Herstellung von im wesentlichen homogenen komprimierten Gasgemischen, die aus SF₆ und N₂ bestehen, aus getrennt voneinander vorliegenden Gasen, wobei man die getrennt voneinander vorliegenden Gase unter Bildung eines inhomogenen Gasgemisches vorvermischt, das inhomogene Gasgemisch über eine Gasleitung (5) in einen statischen Mischer (7) und danach in einen Puffertank (6) leitet, das Gasgemisch aus dem Puffertank (6) in einen Kompressor (7) leitet und aus dem Kompressor (7) im wesentlichen homogenes komprimiertes Gasgemisch abzieht, wobei man einen Teil des aus dem Kompressor (7) abgezogenen, im wesentlichen homogenen komprimierten Gasgemisches über eine Rückführungsleitung (10) in den Puffertank (6) rückführt, und man im wesentlichen homogene komprimierte Gasgemische erzeugt, die 3 bis 50 Vol-% SF₆, vorzugsweise 3 bis 20 Vol-% SF₆, Rest auf 100 Vol.-% N₂ enthalten, wobei der gewünschte Gehalt an SF₆ in einer gezogenen Probe maximal um ±0,7 Vol.-% von demjenigen Wert abweicht, der bei idealer Durchmischung vorliegt.

2. Verfahren nach Anspruch 1, **dadurch gekennzeichnet, daß** man aus dem Kompressor ein Gasgemisch mit einem Druck von bis zu 13 bar abgibt.

3. Verfahren nach Anspruch 1, **dadurch gekennzeichnet, daß** man einen ölfrei arbeitenden Kompressor einsetzt.

4. Verfahren nach Anspruch 3, **dadurch gekennzeichnet, daß** man einen Kolben- oder Membrankompressor verwendet.

5. Verfahren nach Anspruch 1, **dadurch gekennzeichnet, daß** in die Rückführungsleitung ein Regelventil eingebaut ist, welches die Gasgemischrückführung auf einen gewünschten Volumenanteil des abgegebenen komprimierten Gases einregelt.

6. Verfahren nach einem der vorhergehenden Ansprüche, **dadurch gekennzeichnet, daß** man ein aus SF₆ und N₂ bestehendes Gemisch erzeugt und dieses als Isolatorgas in stromleitende Erdkabel eingeleitet wird.

7. Verfahren nach Anspruch 1, **dadurch gekennzeichnet, daß** man zu vermischende Gasströme unter Verwendung von Massendurchflußmessern regelt.

8. Verfahren nach Anspruch 1, **dadurch gekennzeichnet, daß** es unter Verwendung einer mobilen Mischstation durchgeführt wird.

9. Mischstation zur Anwendung gemäß einem der Ansprüche 1 bis 8, welche aufweist: mindestens 2 Zuführungsleitungen (1;2) zur Zuführung der zu vermischenden Gase; eine Gasleitung (5) zur gemeinsamen Weiterleitung der vorvennischten Gase; einen stationären Mischer (7), in den die Gasleitung (5) zur gemeinsamen Weiterleitung der vorvermischten Gase mündet; eine Gasleitung (5') zwischen dem Mischer (F) und dem Puffertank (6) einen Puffertank (6), eine Gasleitung (8), die mit dem Puffertank (6) und einem Kompressor (7) verbunden ist, durch welche Gasgemisch aus dem Puffertank (6) in den Kompressor (7) geleitet wird; einen Kompressor (7), in welchem das aus dem Puffertank (6) abgeleitete Gasgemisch komprimiert und homogenisiert wird; eine Entnahmeleitung (9) zur Ableitung des homogenen komprimierten Gasgemisches aus dem Kompressor (7), eine Rückführungsleitung (10), die mit der Entnahmeleitung (9) aus dem Kompressor (7) und dem Puffertank (6) verbunden ist; ein Regelventil (11) in der Rückführungsleitung (10).

10. Mischstation nach Anspruch 9, **dadurch gekennzeichnet, daß** sie weiterhin umfaßt: mindestens eine Halterung zur Aufnahme von Druckgasflaschen eines oder mehrerer der unvermischten Gase; Anschlüsse zum Anschluß einer Druckgasflasche zur Einfüllung des homogenen komprimierten Gasgemisches; mindestens eine Halterung für eine solche Druckgasflasche.

11. Mischstation nach Anspruch 9 oder 10, **dadurch, gekennzeichnet, daß** sie mindestens ein weiteres Bauteil aus der Gruppe umfassend Manometer, Druckminderer, Durchflußmesser, Abnahmestelle oder Abnahmestellen für Probeentnahme aufweist.

12. Mischstation nach Anspruch 11, **dadurch gekennzeichnet, daß** sie als Durchflußmesser Massendurchflußmesser aufweist.

13. Mobile Mischstation, umfassend
a) die Mischstation nach einem der Ansprüche 9 bis 12;
b) ein Fahrgestell, wobei die Mischstation auf dem Fahrgestell montiert ist.

14. Mobile Mischstation nach Anspruch 13, **dadurch gekennzeichnet, daß** das Fahrgestell ein Lastkraftwagen, ist.

15. Mischstation nach einem der Ansprüche 9 bis 14, **gekennzeichnet durch** Mittel, die die Mischstation gegen Außeneinflüsse wie Schmutz und Witterung abschirmen.

## Claims

1. A method for the production of substantially homogeneous compressed gas mixtures which consist of SF₆ and N₂ from gases which are separately present, in which the gases which are separately present are premixed, forming a non-homogeneous gas mixture, the non-homogeneous gas mixture is passed via a gas line (5) into a static mixer (7) and then into a buffer tank (6), the gas mixture is passed from the buffer tank (6) into a compressor (7) and substantially homogeneous compressed gas mixture is withdrawn from the compressor (7), wherein a portion of the substantially homogeneous compressed gas mixture withdrawn from the compressor (7) is returned into the buffer tank (6) via a return line (10), and substantially homogeneous compressed gas mixtures are produced which contain 3 to 50% by volume SF₆, preferably 3 to 20% by volume SF₆, remainder to make up to 100% by volume N₂, the desired content of SF₆ in a sample which is taken deviating by at most ±0.7% by volume from the value which is obtained with ideal thorough mixing.

2. A method according to Claim 1, **characterised in that** a gas mixture having a pressure of up to 13 bar is delivered from the compressor.

3. A method according to Claim 1, **characterised in that** a compressor which operates without oil is used.

4. A method according to Claim 3, **characterised in that** a piston or diaphragm compressor is used.

5. A method according to Claim 1, **characterised in that** a control valve is installed in the return line, which valve adjusts the return of gas mixture to a desired volume percentage of the compressed gas delivered.

6. A method according to one of the preceding claims, **characterised in that** a mixture consisting of SF₆ and N₂ is produced and is introduced as an insulating gas into current-conducting underground cables.

7. A method according to Claim 1, **characterised in that** gas streams which are to be mixed are regulated using mass flow meters.

8. A method according to Claim 1, **characterised in that** it is performed using a mobile mixing station.

9. A mixing station for use according to one of Claims 1 to 8, which has: at least two feed lines (1; 2) for feeding the gases to be mixed; a gas line (5) for jointly passing on the premixed gases; a stationary mixer (7) into which the gas line (5) for jointly passing on the premixed gases opens; a gas line (5') between the mixer (F) and the buffer tank (6); a buffer tank (6); a gas line (8) which is connected to the buffer tank (6) and a compressor (7), through which line gas mixture is passed from the buffer tank (6) into the compressor (7); a compressor (7) in which the gas mixture carried off from the buffer tank (6) is compressed and homogenised; a removal line (9) for carrying the homogeneous compressed gas mixture out of the compressor (7); a return line (10), which is connected to the removal line (9) from the compressor (7) and the buffer tank (6); a control valve (11) in the return line (10).

10. A mixing station according to Claim 9, **characterised in that** it further comprises: at least one holder for holding gas cylinders for one or more of the unmixed gases; connections for connecting a gas cylinder for feeding in the homogeneous compressed gas mixture; at least one holder for such a gas cylinder.

11. A mixing station according to Claim 9 or 10, **characterised in that** it comprises at least one further component from the group comprising manometer, pressure reducer, flow meter, removal point or removal points for taking samples.

12. A mixing station according to Claim 11, **characterised in that** it has mass flow meters as flow meters.

13. A mobile mixing station, comprising
a) the mixing station according to one of Claims 9 to 12;
b) an undercarriage, the mixing station being mounted on the undercarriage.

14. A mobile mixing station according to Claim 13, **characterised in that** the undercarriage is a lorry.

15. A mixing station according to one of Claims 9 to 14, **characterised by** means which shelter the mixing station from external influences such as dirt and weather.

## Revendications

1. Procédé de préparation de mélanges essentiellement homogènes et comprimés de gaz composés de SF₆ et de N₂, à partir de gaz se présentant séparément les uns des autres, dans lequel on effectue un pré-mélange des gaz se présentant séparément les uns des autres en formant un mélange non homogène de gaz, le mélange non homogène de gaz est ensuite amené par une conduite de gaz (5) dans un mélangeur statique (F) puis dans une cuve tampon (6), le mélange de gaz est dirigé depuis la cuve tampon (6) dans un compresseur (7) et est soutiré du compresseur (7) en un mélange essentiellement homogène et comprimé de gaz, suite à quoi une partie du mélange de gaz soutiré du compresseur (7), essentiellement homogène et comprimé, est ramenée dans la cuve tampon (6) par le biais d'une conduite de retour (10), et on génère des mélanges essentiellement homogènes et comprimés de gaz qui contiennent 3 à 50 % en volume de SF₆, de préférence 3 à 20 % en volume de SF₆, le reste à 100 % en volume de N₂, la teneur souhaitée en SF₆ déviant, dans un échantillon prélevé, au maximum de ± 0,7 % en volume par rapport à la valeur correspondant à un mélange idéal.

2. Procédé selon la revendication 1, **caractérisé en ce que** l'on dégage du compresseur un mélange de gaz à une pression allant jusqu'à 13 bars.

3. Procédé selon la revendication 1, **caractérisé en ce que** l'on utilise un compresseur sans huile.

4. Procédé selon la revendication 3, **caractérisé en ce que** l'on utilise un compresseur à piston ou à membrane.

5. Procédé selon la revendication 1, **caractérisé en ce qu'**est incorporée dans la conduite de retour une soupape de réglage qui régule le retour de mélange de gaz à une fraction en volume souhaitée du gaz comprimé dégagé.

6. Procédé selon l'une des revendications précédentes, **caractérisé en ce que** l'on génère un mélange composé de SF₆ et N₂ et **en ce que** celui-ci est introduit en tant que gaz isolant dans un câble enterré conducteur de courant.

7. Procédé selon la revendication 1, **caractérisé en ce que** l'on régule les flux gazeux à mélanger en utilisant des débitmètres massiques.

8. Procédé selon la revendication 1, **caractérisé en ce qu'**il est conduit en utilisant une station de mélange mobile.

9. Station de mélange pour une utilisation selon l'une des revendications 1 à 8, qui présente : au moins deux conduites d'amenée (1 ; 2) permettant d'amener les gaz à mélanger ; une conduite de gaz (5) destinée au transfert conjoint des gaz pré-mélangés ; un mélangeur fixe (F) dans lequel débouche la conduite de gaz (5) permettant le transfert conjoint des gaz pré-mélangés ; une conduite de gaz (5') entre le mélangeur (F) et la cuve tampon (6) ; une cuve tampon (6) ; une conduite de gaz (8) qui est reliée à la cuve tampon (6) et à un compresseur (7), par laquelle le mélange de gaz provenant de la cuve tampon (6) est amené dans le compresseur (7) ; un compresseur (7) dans lequel le mélange de gaz amené depuis la cuve tampon (6) est comprimé et homogénéisé ; une conduite de soutirage (9) permettant de dériver le mélange homogène comprimé de gaz depuis le compresseur (7) ; une conduite de retour (10) qui est reliée à la conduite de soutirage (9) depuis le compresseur (7) et la cuve tampon (6) ; une soupape de réglage (11) dans la conduite de retour (10).

10. Station de mélange selon la revendication 9, **caractérisée en ce qu'**elle comprend en outre : au moins un support permettant de loger des bouteilles de gaz comprimé d'un ou de plusieurs des gaz non mélangés ; des raccords permettant de raccorder une bouteille de gaz comprimé destinée au remplissage du mélange homogène comprimé de gaz ; au moins un support pour une telle bouteille de gaz comprimé.

11. Station de mélange selon la revendication 9 ou 10, **caractérisée en ce qu'**elle présente au moins un autre élément du groupe comprenant un manomètre, un détendeur, un débitmètre, un point de prélèvement ou des points de prélèvement pour le prélèvement d'échantillons.

12. Station de mélange selon la revendication 11, **caractérisée en ce qu'**elle présente en tant que débitmètre un débitmètre massique.

13. Station de mélange mobile comprenant :
a) la station de mélange selon l'une des revendications 9 à 12 ;
b) un châssis, la station de mélange étant montée sur le châssis.

14. Station de mélange mobile selon la revendication 13, **caractérisée en ce que** le châssis est un véhicule utilitaire.

15. Station de mélange selon l'une des revendications 9 à 14, **caractérisée par** des moyens qui protègent la station de mélange des influences externes telles que la poussière et les conditions atmosphériques.
